Europäisches Patentamt

**European Patent Office**

**Office européen des brevets**

(19)

(11) Numéro de publication : **0 192 555**
**B1**

(12) **FASCICULE DE BREVET EUROPÉEN**

(45) Date de publication du fascicule du brevet :
20.09.89

(21) Numéro de dépôt : **86400275.3**

(22) Date de dépôt : **07.02.86**

(51) Int. Cl.⁴ : **B 29 C 67/18**, B 29 C 51/14,
B 29 C 65/02, G 01 F 15/16,
G 01 F   3/22

(54) Procédé de réalisation de membranes synthétiques pour compteur à gaz et compteur à gaz comportant une membrane obtenue par la mise en oeuvre dudit procédé.

(30) Priorité : **12.02.85 FR 8501931**

(43) Date de publication de la demande :
**27.08.86 Bulletin 86/35**

(45) Mention de la délivrance du brevet :
**20.09.89 Bulletin 89/38**

(84) Etats contractants désignés :
**AT BE DE FR GB IT NL SE**

(56) Documents cités :
EP–A– 0 128 838
DE–A– 2 014 547
DE–A– 2 143 150
DE–A– 3 037 050
DE–B– 312 238
FR–A– 1 346 862
FR–A– 1 586 907
FR–A– 2 030 111
FR–A– 2 075 248
FR–A– 2 226 652
FR–A– 2 377 265
US–A– 2 650 184
US–A– 2 849 026
US–A– 3 320 346

(73) Titulaire : **SCHLUMBERGER INDUSTRIES**
**50, avenue Jean Jaurès**
**F-92120 Montrouge (FR)**

(72) Inventeur : **de Rego, André**
**4, rue de Châteaufort**
**F-92160 Antony (FR)**

(74) Mandataire : **Dronne, Guy**
**SCHLUMBERGER INDUSTRIES Centre de Recher-**
**ches/SMR BP 620-05**
**F-92542 Montrouge Cédex (FR)**

EP 0 192 555 B1

Jouve, 18, rue St-Denis, 75001 Paris, France

## Description

La présente invention a pour objet un procédé de réalisation de membranes synthétiques pour compteur à gaz et des compteurs à gaz comportant une membrane obtenue par ledit procédé.

Il est bien connu que les compteurs à gaz dits « à chambre » comportent au moins une membrane déformable qui sépare deux chambres volumétriques de mesure adjacentes. L'introduction et l'évacuation du gaz dont on veut mesurer le débit dans les chambres de mesure provoque un déplacement alternatif de la membrane. Le déplacement de la membrane est transmis par un système mécanique à un totalisateur qui permet ainsi d'afficher la quantité de gaz qui a traversé les chambres de mesure. La périphérie de la membrane est solidaire de la paroi commune des chambres alors que sa partie centrale est solidaire du mécanisme reliant la membrane au totalisateur.

Pour que le compteur à gaz fournisse la précision de mesure requise il est nécessaire que la membrane elle-même présente des propriétés bien particulières. Elle doit présenter une très bonne étanchéité. A titre d'exemple, la membrane doit tenir une pression de 50 millibars pendant une minute sans qu'il n'y ait pratiquement pas de fuite. La membrane doit également présenter une très bonne souplesse et une très bonne flexibilité ainsi qu'une grande résistance mécanique à la fatigue, laquelle est essayée par des tests d'endurance. Par exemple, la membrane doit pouvoir être soumise à 2 000 000 cycles à une fréquence de 100 cycles par minute sans subir de détérioration significative. En outre, la membrane doit conserver son intégrité en présence de différents hydrocarbures qui sont susceptibles d'être présents dans le gaz à mesurer. En particulier, les tests prévoient que la membrane doit résister à un mélange de toluène et d'heptane.

Traditionnellement, dans ce type de compteurs, on a utilisé des membranes en peau de chèvre spécialement traitées et sélectionnées. Leur coût est relativement élevé. En raison des exigences mentionnées ci-dessus, il a été longtemps difficile de réaliser des membranes en matière synthétique qui présentent les caractéristiques requises. C'est ainsi qu'on a déjà proposé de réaliser la membrane en partant d'une structure de fibres tissées, par exemple, en polyester, imprégnée de couches de caoutchouc synthétique. Ces structures imprégnées de caoutchouc posent des problèmes de stockage en raison de phénomènes d'auto-vulcanisation dans le temps à la température ambiante. Cette solution présente l'inconvénient que le caoutchouc synthétique doit être vulcanisé pour acquérir ses propriétés définitives. Une telle vulcanisation entraîne une consommation d'énergie non négligeable. En outre, comme cela est bien connu, le traitement du caoutchouc synthétique entraîne des risques non négligeables de pollution. On a également proposé de réaliser les membranes à l'aide d'une simple couche d'un matériau plastique. On connaît, par le brevet US 2 849 026, un diaphragme constituant un transducteur de pression et formé d'une structure tissée et d'un film élastomère, tous deux préalablement formés et ensuite assemblés par pression à chaud. Ce procédé connu présente l'inconvénient que la conformation de la structure tissée ou du film élastomère est réalisée avant la formation du complexe (structure tissée — film élastomère). En outre, le film élastomère est réalisé en caoutchouc, caoutchouc synthétique ou en un matériau similaire, de sorte que la membrane obtenue présente également l'inconvénient énuméré plus haut.

Aucune de ces tentatives n'a encore donné des résultats satisfaisants pour leur utilisation dans un compteur à gaz.

Pour remédier à ces inconvénients, un objet de l'invention est de fournir un procédé de réalisation de membranes de compteurs à gaz qui ne fait pas appel aux techniques de vulcanisation et qui permet cependant d'obtenir des membranes qui ont une résistance mécanique et une souplesse et une flexibilité suffisantes tout en présentant une bonne inertie chimique aux produits susceptibles d'être présents dans le gaz à mesurer.

Pour atteindre ce but selon l'invention, le procédé pour réaliser une membrane de compteur à gaz comprend les étapes suivantes :
— on dispose vis-à-vis d'une face d'une structure d'épaisseur sensiblement constante en fibres synthétiques, un film en un matériau élastomère thermoplastique non vulcanisable ;
— on porte ledit matériau élastomère à sa température de ramollissement ;
— simultanément on exerce sur l'ensemble constitué par ladite structure et ledit film une pression pour que ledit matériau élastomère adhère à ladite structure, obture les interstices de ladite structure et recouvre entièrement ladite face de la structure par déformation dudit film.
— on supprime ladite pression et on laisse refroidir le complexe ainsi obtenu, et
— on forme ledit complexe pour obtenir la conformation de membrane souhaitée.

On obtient une membrane dont la flexibilité et la résistance mécanique sont suffisantes mais qui ne fait appel à aucune opération de vulcanisation.

Selon un mode préféré de mise en œuvre du procédé on dispose un film en matériau élastomère thermoplastique de part et d'autre de la structure en fibres synthétiques et on exerce la pression sur l'ensemble constitué par la structure et les deux films en élastomère thermoplastique.

On obtient alors une membrane ayant une structure parfaitement symétrique.

De préférence encore, le matériau formant les fibres synthétiques est un polyester et la structure est tissée.

De préférence également, le film élastomère thermoplastique est un polyuréthane.

Un autre objet de l'invention est de fournir un compteur à gaz du type décrit, par exemple, dans le document de brevet EP-A-128 838, compteur à gaz dans lequel la fixation étanche de la périphérie de la membrane sur le corps du compteur est simplifiée. Pour atteindre ce but selon l'invention, la membrane est constituée d'un complexe formé d'une structure, d'épaisseur sensiblement constante, en fibres synthétiques, et d'un film en un matériau élastomère thermoplastique recouvrant entièrement une face de ladite structure et adhérant à cette dernière, et la périphérie de la membrane est fixée sur la caisse par thermosoudage.

D'autres caractéristiques et avantages de l'invention apparaîtront plus clairement à la lecture de la description qui suit de plusieurs modes de mise en œuvre de l'invention donnés à titre d'exemples non limitatifs. La description se réfère au dessin annexé sur lequel :

— les figures 1a et 1b illustrent un premier mode de réalisation de la membrane synthétique selon l'invention selon un plan de coupe vertical ;

— les figures 2a et 2b représentent une variante de réalisation de la membrane selon des vues en coupe verticale ;

— la figure 3 est une vue en coupe d'une membrane conformée, selon l'invention ;

— la figure 3a est une vue d'ensemble en coupe verticale d'un appareil pour réaliser le conformage ;

— la figure 3b est une vue d'ensemble en coupe verticale d'un appareil pour réaliser simultanément le complexage et le conformage de la membrane ;

— la figure 4 est une vue en élévation, partiellement écorchée d'un compteur à gaz selon un premier mode de mise en œuvre de l'invention ;

— la figure 5 est une vue en coupe selon la ligne V-V de la figure 4, et

— la figure 6 est une vue en coupe partielle d'une variante de réalisation d'un compteur à gaz selon l'invention.

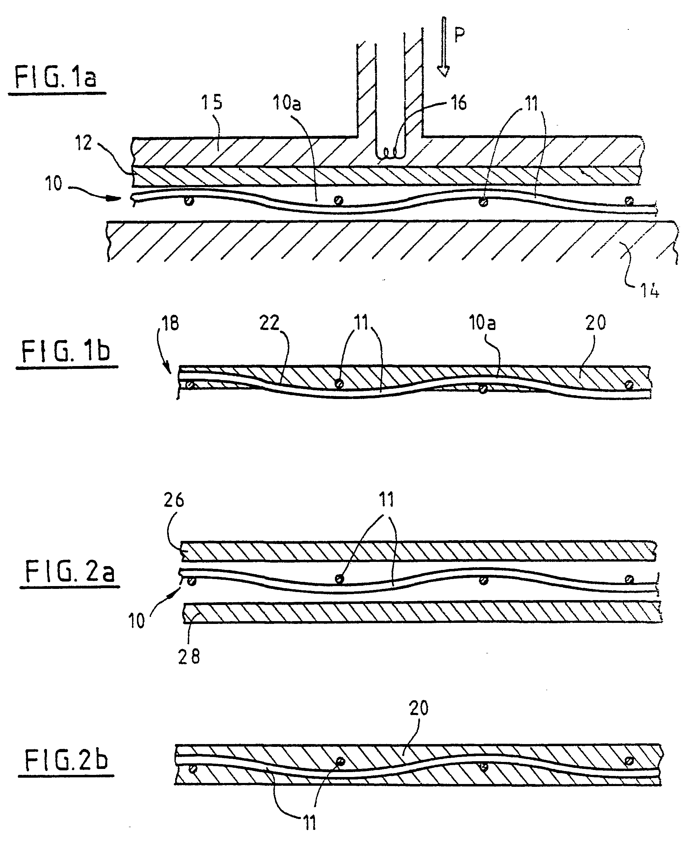

En se référant tout d'abord aux figures 1a et 1b on va décrire un premier mode de réalisation de la membrane synthétique pour compteurs à gaz selon l'invention. La structure de départ est constituée par une structure de fibres synthétiques portant la référence générale 10 et par un film de matériau élastomère thermoplastique 12. De préférence, la structure 10 en fibres synthétiques 11 est du type tissé. Dans l'exemple particulier décrit, les fibres 11 sont réalisées en polyester, et le poids de ces fibres exprimé en grammes par longueur de 10 000 mètres de fibre est de l'ordre de 50. Plus précisément on utilise des fibres de 33 décitex (33 g/10 000 de fibre). Les mailles du tissu sont par exemple carrées et la longueur du côté d'une maille est de l'ordre de 2/10 de millimètre. L'épaisseur du tissu est sensiblement constante et de l'ordre de 10/100ème de millimètre. On pourrait également utiliser des fibres en polyamide. Le film élastomère thermoplastique 12 est de préférence le matériau vendu sous la marque PLATILON U par la société allemande PLATE BONN. Il s'agit d'un polyuréthane. De préférence, l'épaisseur de ce film est de l'ordre de 2,5 à 3/100 de millimètre. Pour le film 12 on pourrait également utiliser un élastomère de polyester thermoplastique à base d'ester de polyéther, par exemple le produit vendu sous la marque ARNITEL par la société hollandaise AKZO PLASTICS.

Pour réaliser la membrane à partir de la structure 10 et du film 12 on place la structure 10 sur un plateau 14 et on place le film 12 sur une des faces 10a de la structure 10. A l'aide d'un deuxième plateau 14 qui comporte des moyens de chauffage symbolisé par la résistance chauffante 16 on applique à l'empilement constitué par la structure 10 et le film 12 une pression prédéterminée tout en portant le film de polyuréthane 12 à sa température de ramollissement. Dans l'exemple particulier décrit la température de ramollissement est de l'ordre de 170 degrés Celsius et la pression de l'ordre de 50 bars. La pression est maintenue à l'aide du plateau 14 pendant environ 1 minute puis on supprime cette pression et on laisse refroidir le complexe 18 ainsi obtenu. Le matériau thermoplastique étant porté à sa température de ramollissement, la figure 1b, qui montre la structure finale, indique clairement que le matériau plastique portant la référence générale 20 est déformé et pénètre dans les interstices tel que 22 définis par les fibres 11 de la structure 10. Cependant il faut noter que le matériau plastique 20 recouvre entièrement la face 10a de la structure 10 vis-à-vis de laquelle était disposé le film thermoplastique. On obtient ainsi un complexe 18 parfaitement étanche et qui présente la résistance mécanique requise pour pouvoir supporter le nombre de cycles imposés tout en présentant une souplesse suffisante obtenue, notamment, par la faible épaisseur du matériau plastique 20. A partir de ce complexe, on réalise la membrane proprement dite par conformation du complexe. Cela consiste essentiellement à donner au complexe une forme incurvée et à découper la périphérie de la membrane pour lui donner les cotes requises. Ces opérations peuvent être effectuées à l'aide d'un moule présentant la forme finale de la membrane. Le moule est chauffé à une température inférieure à la température de ramollissement du complexe, par exemple 120 à 130 °C pendant 10 minutes. Puis on laisse refroidir le moule et donc la membrane avant de procéder au démoulage de la membrane conformée.

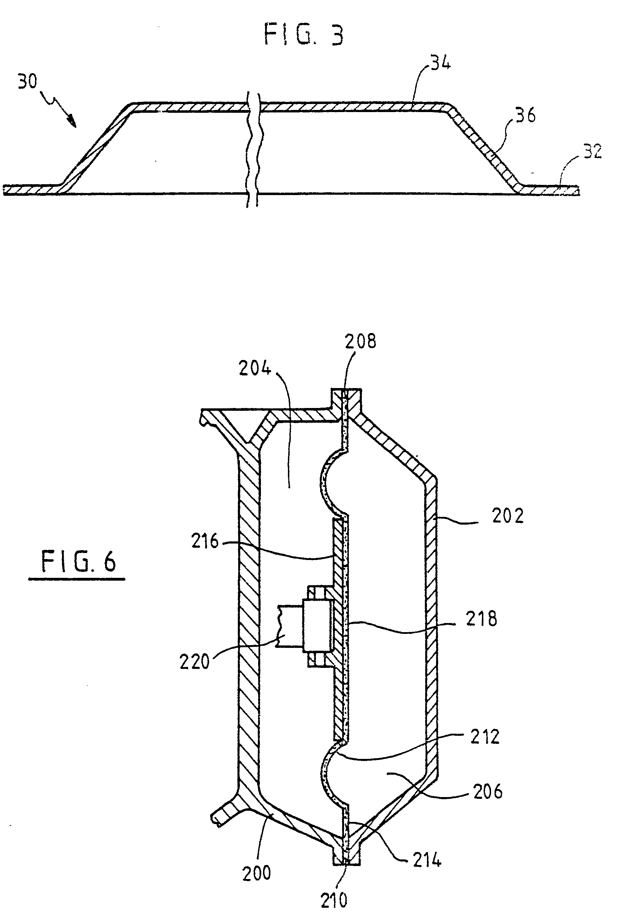

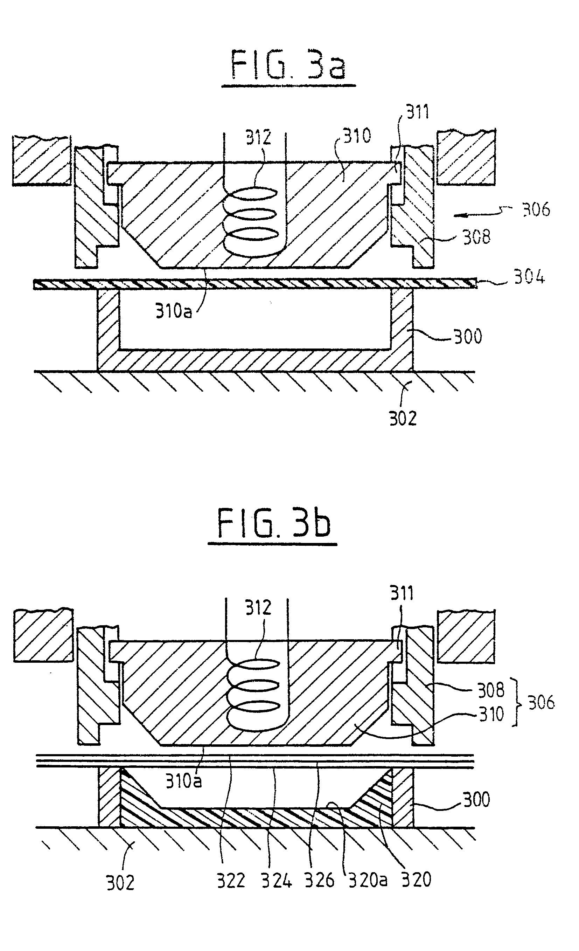

Sur la figure 3 on a représenté une membrane conformée selon l'invention. La membrane 30 comprend un rebord sensiblement plan 32, un fond également sensiblement plan et une portion formant soufflet 36. Pour simplifier la figure 3 on n'a pas représenté la structure de la membrane qui est identique à celle représentée sur les figures 1b et 2b.

La figure 3a montre un appareil pour réaliser le conformage d'une membrane pour compteurs à gaz à partir du complexe déjà réalisé. L'appareil comprend un support 300 en forme de cadre ayant les dimensions du rebord plan de la membrane à réaliser. Ce support 300 repose sur le plateau fixe 302 d'une presse. Le complexe 304 à conformer repose sur le cadre 300. L'appareil comprend également un ensemble mobile 306 comprenant un organe presseur 308 et un moule mâle 310. L'organe presseur 308 est monté sur un plateau mobile de la presse. L'organe 308 a également la forme d'un cadre pour assurer, en position basse, avec le bord 300a du support 300 le pinçage de la périphérie du complexe 304.

L'extrémité active 310a du moule 310 a une forme qui correspond à celle qu'on veut donner au diaphragme. Le moule mâle 310 est muni de moyens de chauffage représentés par la résistance chauffante 312.

Le fonctionnement de l'appareil découle de la description précédente. Dans un premier temps l'organe presseur 306 est abaissé pour pincer la périphérie du complexe 304. Dans un deuxième temps le moule mâle est abaissé pour conformer le diaphragme par la coopération de chauffage du complexe et de l'action de l'extrémité active 310a du moule mâle. L'abaissement est limité par les butées latérales 311 du moule 310. Puis l'apport de chaleur est interrompu et le diaphragme est démoulé après un temps de refroidissement convenable.

La figure 3b montre une variante de l'appareil de la figure 3a qui permet de réaliser à la fois le complexage et le conformage de la membrane. Cet appareil est très semblable à celui de la figure 3a et on a repris les mêmes références numériques pour désigner les parties communes.

La différence réside dans le fait que le support 300 en forme de cadre contient un remplissage partiel 320, en un matériau élastomère. Il s'agit par exemple de polyuréthane ou de silicone. Le matériau est coulé dans le support 300 et on donne à sa face supérieure 320a une forme en creux correspondant à l'extrémité active 310a du moule mâle. Le remplissage 310 constitue ainsi un moule mâle mais réalisé en un matériau présentant une certaine possibilité de déformation.

Les trois feuilles destinées à réaliser le diaphragme, à savoir les feuilles films thermoplastiques 322 et 324 et la structure tissée ou non, ou tricotée 326, sont placées sur le support 300.

On abaisse l'organe presseur 308 puis le moule mâle 310. Le moule mâle 310 est chauffé par la résistance chauffante 312 jusqu'à ce que les feuilles 322 et 326 soient portées à leur température de ramollissement. Simultanément, du fait de la présence du moule femelle 320, l'empilement des trois feuilles est soumis à une pression qui permet de réaliser le complexage puis le conformage. Pour le démoulage on procède comme cela a été indiqué en liaison avec la figure 3a.

D'autres essais ont montré qu'on peut utiliser une structure tissée à mailles sensiblement carrées ayant une longueur de côté allant jusqu'à 3 à 4 millimètres.

Dans l'exemple décrit précédemment, la réalisation de la membrane est obtenue de manière discontinue à l'aide du plateau fixe 14 et du plateau mobile 15. Bien entendu, la membrane pourrait être obtenue de façon continue à l'aide de rouleaux de calandrage.

Il est important d'observer que l'adhérence du matériau élastomère sur la structure tissée de base est obtenue par thermofusion ce qui évite le recours à un adhésif. En outre, l'élastomère utilisé étant du type thermoplastique il ne requiert aucune opération de vulcanisation pour atteindre son état final.

Comme le montrent les figures 2a et 2b, de préférence on réalise une membrane à structure symétrique en partant d'une structure tissée 10 identique à la structure tissée 10 de la figure 1a et de deux films en élastomère thermoplastique respectivement référencés 26 et 28 qui sont au départ disposés de part et d'autre de la structure 10. Par l'opération décrite précédemment en liaison avec les figures 1a et 1b on porte les deux films thermoplastiques 26 et 28 à leur température de ramollissement pour provoquer une déformation de ceux-ci par la structure de base 10 et obtenir un complexe telle que représentée sur la figure 2b. Dans ce cas les deux faces de la structure de base sont recouvertes par le matériau thermofusible 20. La membrane ainsi obtenue à partir du tissu de polyester et de films thermoplastiques ayant des caractéristiques déjà décrites, a une épaisseur de l'ordre de 15/100$^e$ de millimètre.

Comme cela est bien connu, pour obtenir effectivement une membrane utilisable dans un compteur à gaz, il faut découper le complexe et lui donner la forme requise à partir de sa forme plane initiale. Ces opérations dites de conformation de la membrane peuvent être réalisées de façon classique comme décrit précédemment.

Au lieu de partir d'une structure de fibres tissées, on peut également utiliser une structure tricotée. De telles structures sont, en soi, bien connue. La structure tricotée est particulièrement bien adaptée au cas où l'on utilise un seul film thermoplastique.

Outre les avantages déjà cités, la membrane obtenue par le procédé selon l'invention peut être fixée plus aisément que les membranes antérieures sur les parois de la chambre de mesure du compteur lorsque ces parois sont réalisées en un matériau plastique. Avec une membrane classique, la périphérie de celle-ci est en général fixée sur la paroi de la chambre de mesure à l'aide d'une bride rendue solidaire de la paroi, la périphérie de la membrane étant pincée entre la bride et un épaulement ménagé dans la paroi, c'est ce qui est décrit dans la demande de brevet européen N° 128 838 déposée au nom de la demanderesse pour un compteur à gaz. Une membrane selon l'invention peut être directement fixée sur la paroi de façon étanche par thermo-soudage.

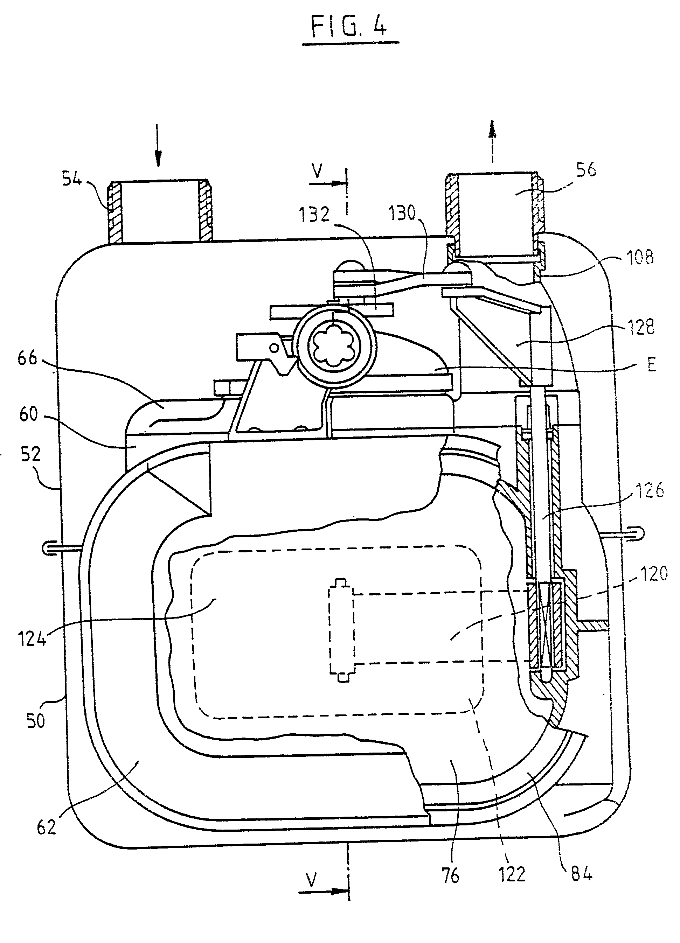

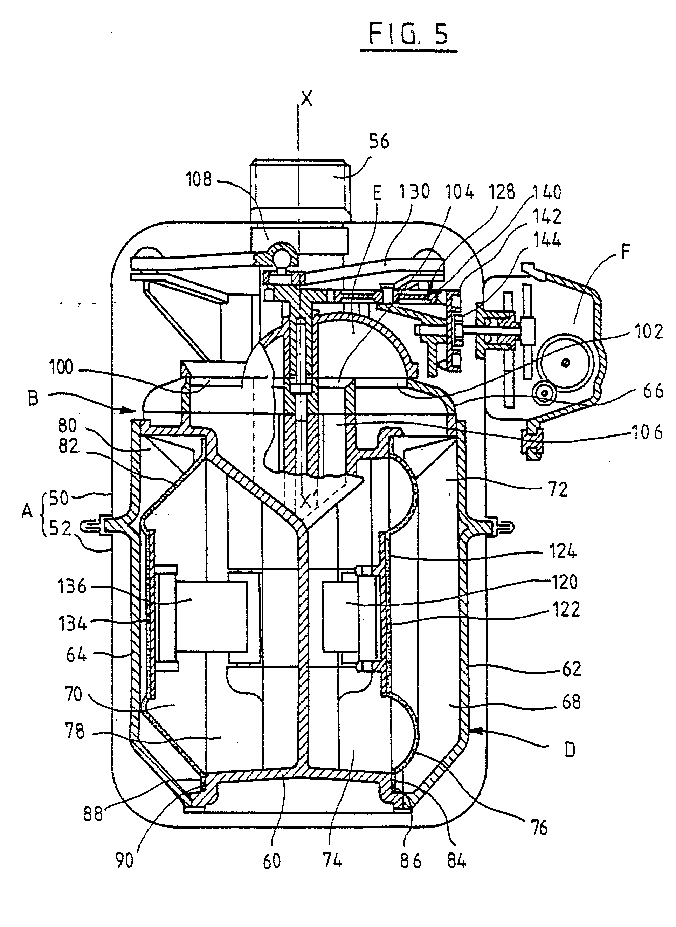

En se référant maintenant aux figures 4 et 5 on va décrire un exemple de réalisation de compteur à gaz selon l'invention, comportant deux membranes obtenues par le procédé selon l'invention.

Ce compteur a exactement la même structure que celui qui est décrit dans la demande de brevet européen déjà citée, à l'exception des membranes formant les soufflets et du mode de fixation des soufflets sur la caisse du compteur et de l'extrémité des leviers de la chaîne cinématique du compteur sur les soufflets. On ne décrira donc que succinctement la structure générale du compteur.

Le compteur se compose d'une enveloppe externe étanche A formée par deux coquilles 50 et 52 et munie d'une buse 54 d'introduction du gaz à mesurer et d'une buse 56 de sortie du gaz. A l'intérieur de l'enveloppe A le compteur comprend une unité de mesure B formée par une caisse D et un distributeur rotatif E. Enfin le compteur comporte un totalisateur F.

La caisse D est formée par un bloc central 60, deux couvercles latéraux 62 et 64 et un couvercle de distribution 66. Le bloc central 60 et les couvercles latéraux 62 et 64 sont réalisés en un matériau thermoplastique. Il s'agit, par exemple, du matériau thermoplastique commercialisé sous la marque Nylon ou de celui qui est commercialisé sous la marque Delrin. Les couvercles latéraux 62 et 64 sont soudés sur le bloc central 60 pour définir deux compartiments de mesure 68 et 70. Le compartiment de mesure 68 est divisé en deux chambres de mesure 72 et 74 par un soufflet déformable 76. De même, le compartiment de mesure 70 est divisé en deux chambres de mesure 78 et 80 par un soufflet déformable 82. Selon l'invention les soufflets 76 et 82 sont constitués par des membranes conformées définies précédemment en liaison avec les figures 1 à 3. Le rebord 84 de la membrane formant le soufflet 76 est thermo-soudé sur un épaulement 86 ménagé dans la partie du bloc central 60 tournée vers le couvercle latéral 62. De même le rebord 88 de la membrane formant le soufflet 82 est thermo-soudé sur un épaulement 90 ménagé dans la partie du bloc central 60 tournée vers le couvercle latéral 64. Le thermo-soudage est réalisé de préférence à l'aide d'un outil chauffant qui a la forme générale de la périphérie de la membrane et qui est appliqué sur celle-ci. Afin d'éviter, lors du chauffage de la membrane, que celle-ci n'adhère à l'extrémité de l'outil, cette extrémité est protégée par un revêtement synthétique dont la température de ramollissement est nettement supérieure à celle de la membrane. On peut par exemple utiliser le matériau commercialisé sous la marque « téflon ». Le thermo-soudage pourrait également être réalisé par soudage aux ultrasons.

On comprend que ce mode de fixation étanche du bord de la membrane est possible du fait que le film d'élastomère qui constitue la face externe de la membrane est thermoplastique de même que le matériau dont est fait la caisse du compteur. Ce mode de fixation du soufflet sur la caisse du compteur est beaucoup plus simple que celui qui est décrit dans la demande de brevet européen déjà citée, tout en réalisant une très bonne étanchéité.

Si l'on revient à la description de la caisse D, on voit que le couvercle de distribution 66 définit quatre lumières, seules les lumières 100 et 102 étant visibles sur la figure 5, et un orifice central 104 de sortie du gaz. Chaque lumière est reliée à une des chambres 68, 72, 78 et 80 par des passages formés par le bloc central 60. L'orifice central 104 est raccordé à la buse de sortie par un passage interne 106 et une conduite 108.

Le distributeur rotatif E est monté pivotant autour de l'axe XX' et glisse sur la face supérieure du couvercle de distribution 66. Le distributeur E qui est décrit en détail dans la demande de brevet européen déjà citée permet de mettre en communication chaque lumière avec l'orifice de sortie 104 et avec l'intérieur de l'enveloppe A où entre le gaz à mesurer. Ainsi chaque chambre 71, 74, 78 et 80 est successivement reliée à l'entrée de gaz 54 et à la sortie de gaz 56.

Pour assurer le synchronisme entre les déplacements des soufflets 76 et 82 et la rotation du distributeur E, l'unité de mesure comprend de plus deux ensembles de liaison cinématique, chaque ensemble reliant un soufflet 76, 82 au distributeur E. Pour le soufflet 76 on trouve, à l'intérieur de la chambre 68, un levier 120 dont une extrémité est articulée sur une plaque de soufflet 122. Selon la présente invention la plaque de soufflet 122 est réalisée en un matériau thermoplastique. La plaque 122 est soudée par thermo-soudage à l'aide d'un outil de chauffage de même nature que celui qui a été décrit pour le soudage de la périphérie de la membrane sur la caisse du compteur plaque de soufflet sur la membrane est beaucoup plus simple que celui qui a été décrit dans la demande de brevet européen déjà citée.

Si l'on revient à la première chaîne cinématique, on voit qu'elle comprend de plus un arbre 126 dont l'extrémité inférieure est solidaire en rotation de la deuxième extrémité du levier 120. L'extrémité supérieure de l'arbre 126 est solidaire d'un autre levier 128 à l'extrémité duquel est articulé un troisième levier 130. Une extrémité du levier 130 est montée pivotante sur une pièce 132 formant manivelle et qui est solidaire en rotation du distributeur E. La deuxième chaîne cinématique est identique à la première et elle comprend en particulier une plaque de soufflet 134 en un matériau thermoplastique thermo-soudé sur la membrane synthétique formant le soufflet 82. L'extrémité d'un levier 136 est montée pivotante sur la plaque de soufflet 134.

Le totalisateur F qui permet l'affichage de la quantité de gaz mesurée est relié à la pièce formant manivelle 132 par un ensemble de roues dentées 140, 142 et par une transmission magnétique 144. Ces moyens de transmission sont décrits plus en détail dans la demande de brevet européen 128 838.

Le fonctionnement du compteur qui vient d'être décrit en liaison avec les figures 4 et 5 est identique à celui du compteur décrit dans la demande de brevet européen rappelée ci-dessus.

L'homme de l'art comprendra que la présente invention n'est nullement liée au type particulier de compteur décrit ci-dessus. L'invention s'applique à tous les compteurs à gaz à chambres dans lesquels deux chambres de mesure doivent être séparées par une membrane souple, la caisse du compteur étant réalisée en un matériau thermoplastique pour permettre le thermo-soudage direct de la périphérie de la membrane sur la paroi interne des chambres. En particulier, l'invention s'applique aux compteurs ayant un nombre de chambres de mesure différent de quatre. Elle s'applique également au cas où le distributeur a un mouvement rectiligne au lieu du mouvement de rotation décrit précédemment.

Il faut ajouter que dans le cas du compteur décrit précédemment en liaison avec les figures 4 et 5 les surfaces de soudage entre les couvercles latéraux 62 et 64 et le bloc central 60 ne sont pas planes, c'est pourquoi il a fallu prévoir des épaulements pour le soudage de la périphérie des soufflets.

La figure 6 illustre schématiquement et partiellement une variante de réalisation du compteur.

Sur cette figure on a représenté de façon simplifiée une partie d'un bloc central 200 qui avec un couvercle latéral 202 définit les chambres de mesure 204 et 206. Le couvercle latéral 202 comporte une face de soudage 208 sur le bloc central 200 qui est plane. De même, la portion du bloc centrale 200 représentée sur la figure 6 présente une face de soudage 210 qui est également plane. La figure 6 montre que les chambres 204 et 206 sont séparées par un soufflet déformable 212 constitué par une membrane synthétique décrite précédemment. Le soufflet 212 comporte un bord plan 214 qui est thermo-soudé entre les faces de soudage 208 et 210 du bloc central 200 et du couvercle latéral 202. De même, une plaque de soufflet 216 en matériau thermoplastique est thermo-soudée sur la partie centrale plane 218 du soufflet. Sur cette pièce est montée une extrémité d'un levier 220 de la chaîne cinématique.

On comprend que l'utilisation de membranes synthétiques pour la réalisation de compteurs à gaz permet non seulement de simplifier le montage des soufflets dans la caisse du compteur, mais également de supprimer certaines opérations de poinçonnage de la membrane, notamment pour réaliser des trous nécessaires à la fixation des plaques de soufflets ou des brides sur les soufflets.

## Revendications

1. Procédé de réalisation d'une membrane de compteur à gaz, comprenant les étapes suivantes :

on dispose vis-à-vis d'une face (10a) d'une structure (10), d'épaisseur sensiblement constante en fibres synthétiques (11), un film (12) en un matériau élastomère thermoplastique non vulcanisable ;

on porte ledit matériau élastomère (12) à sa température de ramollissement ;

simultanément on exerce sur l'ensemble constitué par ladite structure (10) et ledit film (12) une pression pour que ledit matériau élastomère, par déformation dudit film (12), adhère à ladite structure (10), et recouvre entièrement ladite face (10a) de la structure ;

on supprime ladite pression et on laisse refroidir le complexe ainsi obtenu et ;

on conforme ledit complexe pour lui donner la forme requise pour ladite membrane.

2. Procédé selon la revendication 1, caractérisé en ce qu'on dispose un autre film (26) en matériau élastomère thermoplastique (non vulcanisable vis-à-vis de la deuxième face de ladite structure (10), et en ce que ladite pression est appliquée à l'ensemble constitué par ladite structure (10) et les deux films thermoplastiques (26, 28).

3. Procédé selon l'une quelconque des revendications 1 et 2, caractérisé en ce que le matériau élastomère thermoplastique non vulcanisable est un polyuréthane.

4. Procédé selon l'une quelconque des revendications 1 à 3, caractérisé en ce que lesdites fibres (11) de la structure (10) sont en polyester.

5. Procédé selon la revendication 4, caractérisé en ce que lesdites fibres (11) sont en polyamide.

6. Procédé selon l'une quelconque des revendications 1 à 5, caractérisé en ce que ladite structure (10) est tissée et présente des mailles sensiblement carrées dont le côté est compris entre 2/10ème de millimètre et 4 millimètres.

7. Procédé selon la revendication 2, caractérisé en ce que lesdits films (12, 26, 28) en matériau élastomère thermoplastique ont une épaisseur comprise entre 25 et 30 μm.

8. Procédé selon l'une quelconque des revendications 1 à 5, caractérisé en ce que ladite structure de fibres est tricotée.

9. Procédé selon l'une quelconque des revendications 1 à 8, caractérisé en ce que la réalisation du complexe et le conformage du complexe sont effectués simultanément à l'aide du même appareil.

10. Compteur à gaz comprenant une caisse (60, 62, 64, 200, 202) en un matériau thermoplastique définissant au moins deux chambres de mesure (72, 74, 78, 80, 204, 206) séparées par une membrane déformable (78, 82, 212), caractérisé en ce que ladite membrane est constituée d'un complexe formé d'une structure (10), d'épaisseur sensiblement constante, en fibres synthétiques (11), et d'un film (12) en un matériau élastomère thermoplastique non vulcanisable recouvrant entièrement une face (10a) de ladite structure et adhérant à cette dernière, et en ce que la périphérie (84, 88, 214) de ladite membrane est fixée de façon étanche sur une paroi interne (86, 90, 208, 210) de ladite caisse par thermo-soudage.

11. Compteur à gaz selon la revendication 10 comprenant de plus un distributeur (E) et une chaîne cinématique pour relier ladite membrane audit distributeur, ladite chaîne comprenant au moins un levier (120, 220) dont une extrémité est articulée sur une pièce (122, 216) solidaire de la zone centrale de ladite membrane, caractérisé en ce que ladite pièce (122, 216) est réalisée en un matériau thermoplastique et en ce qu'elle est fixée sur ladite membrane par thermo-soudage.

## Claims

1. A method of making a gas meter membrane, comprising the following steps :

a film (12) of non-vulcanizable thermoplastic elastomer material is disposed opposite to one face (10a) of a synthetic fiber (11) structure (10) of substantially constant thickness ;

said elastomer material (12) is raised to its softening temperature ;

simultaneously, pressure is exerted on the assembly constituted by said structure (10) and said film (12) in order to cause said elastomer material to adhere to said structure (10) by deformation of said film (12), and to completely cover said face (10a) of the structure ;

said pressure is then removed and the resulting complex is allowed to cool, and

said complex is shaped in order to obtain a membrane of the desired shape.

2. A method according to claim 1, characterized in that another film (26) of non-vulcanizable thermoplastic elastomer material ·is disposed opposite the second face of said structure (10), and in that said pressure is applied to the assembly constituted by said structure (10) and the two thermoplastic films (26, 28).

3. A method according to claim 1 or 2, characterized in that the non-vulcanizable thermoplastic elastomer material is a polyurethane.

4. A method according to any one of claims 1 to 3, characterized in that said fibers (11) of said structure (10) are made of polyester.

5. A method according to claim 4, characterized in that said fibers (11) are made of polyamide.

6. A method according to any one of claims 1 to 5, characterized in that said structure (10) is woven and has a mesh which is substantially square with a side lying in the range 2/10-ths of a millimeter to 4 millimeters.

7. A method according to claim 2, characterized in that said films (12, 26, 28) of thermoplastic elastomer material are 25 to 30 μm thick.

8. A method according to anyone of claims 1 to 5, characterized in that said fiber structure is knitted.

9. A method according to anyone of claims 1 to 8, characterized in that the making of the complex and the shaping of the complex are carried out simultaneously with the same apparatus.

10. A gas meter comprising a housing (60, 62, 64, 200, 202) made of a thermoplastic material defining at least two measuring chambers (72, 74, 78, 80, 204, 206) separated by a deformable membrane (78, 82, 212), characterized in that said membrane is constituted by a complex made up of a synthetic fiber (11) structure (10) of substantially constant thickness and of a film (12) of non-vulcanizable thermoplastic elastomer material covering entirely a face (10a) of said structure and adhering to it, and in that the periphery (84, 88, 214) of said membrane is fixed in sealed manner on an internal wall (86, 90, 208, 210) of said housing by hot welding.

11. A gas meter according to claim 10 further including a distributor (E) and a mechanical drive chain for connecting said membrane to said distributor, said chain including at least one lever (120, 220) with one end hinged to a part (122, 216) which is fixed to the central zone of said membrane, characterized in that said part (122, 216) is made of a thermoplastic material and in that it is fixed to said membrane by hot welding.

## Patentansprüche

1. Verfahren zur Herstellung einer Membran eines Gaszählers, das die folgenden Schritte beinhaltet :

man ordnet gegenüber einer Seite (10a) einer Struktur (10) von im wesentlichen konstanter Dicke aus synthetischen Fasern (11) einen Film (12) und ein elastomeres thermoplastisches nicht vulkanisierbaren Material an ;

man bringt dieses elastomere Material (12) auf seine Erweichungstemperatur ;

gleichzeitig übt man auf die Anordnung, die durch die Struktur (10) und den Film (12) gebildet wird, einen Druck aus, damit das elastomere Material durch Verformung des Films (12) an der Struktur (10) anhaftet und vollkommen die Seite (10a) der Struktur bedeckt ;

man nimmt den Druck weg und läßt den so erhaltenen Komplex erkalten und ;

man verformt den Komplex, um ihm die geforderte Form für die Membran zu geben.

2. Verfahren gemäß Patentanspruch 1, dadurch gekennzeichnet, daß man einen weiteren Film (26) aus einem elastomeren thermoplastischen nicht vulkanisierbaren Material gegenüber der zweiten Seite der Struktur (10) anbringt und daß der Druck auf die Anordnung angewendet wird, die aus der Struktur (10) und den zwei thermoplastischen Filmen (26, 28) besteht.

3. Verfahren nach einem der Patentansprüche 1 und 2, dadurch gekennzeichnet, daß das elastomere thermoplastische nicht vulkanisierbare Material ein Polyurethan ist.

4. Verfahren nach einem der Patentansprüche 1 bis 3, dadurch gekennzeichnet, daß die Fasern (11) der Struktur (10) aus Polyester sind.

5. Verfahren gemäß Patentanspruch 4, dadurch gekennzeichnet, daß die Fasern (11) Polyamide sind.

6. Verfahren gemäß einem der Patentansprüche 1 bis 5, dadurch gekennzeichnet, daß die Struktur (10) gewebt ist und im wesentlichen quadratische Maschen hat, deren Seite zwischen 2/10 eines Millimeters und 4 Millimetern liegt.

7. Verfahren gemäß Patentanspruch 2, dadurch gekennzeichnet, daß die Filme (12, 26, 28) aus elastomerem thermoplastischen Material eine Dicke zwischen 25 und 30 μm haben.

8. Verfahren gemäß einem der Patentansprüche 1 bis 5, dadurch gekennzeichnet, daß die Struktur aus Fasern gestrickt ist.

9. Verfahren gemäß einem der Patentansprüche 1 bis 8, dadurch gekennzeichnet, daß die Realisierung des Komplexes und die Verformung des Komplexes gleichzeitig mit Hilfe des gleichen Gerätes ausgeführt werden.

10. Gaszähler, der einen Kasten (60, 62, 64, 200, 202) aus einem thermoplastischen Material enthält und wenigsten zwei Meßkammern (72, 74, 78, 80, 204, 206) bildet, die durch eine verformbare Membran (78, 82, 212) getrennt sind, dadurch gekennzeichnet, daß die Membran aus einem Komplex besteht, der aus einer Struktur (10) von im wesentlichen konstanter Dicke aus synthetischen Fasern (11) und einem Film (12) aus einem elastomeren thermoplastischen nicht vulkanisierbaren Material, das vollkommen eine Seite (10a) der Struktur bedeckt und an dieser letzten anhaftet, gebildet ist, und dadurch, daß der Membranumfang (84, 88, 214) auf dichte Weise an einer Innenwand (86, 90, 208, 210) des besagten Kastens durch Thermoschweißung befestigt ist.

11. Gaszähler gemäß Patentanspruch 10, der zusätzlich einen Verteiler (E) und eine kinematische Kette enthält, um die Membran mit dem Verteiler zu verbinden, wobei die Kette wenigstens einen Hebel (120, 220) enthält, von dem ein Ende gelenkig gelagert ist auf einem Teil (122, 216), das fest mit der zentralen Zone der besagten Membran verbunden ist, dadurch gekennzeichnet, daß das Teil (122, 216) aus einem thermoplastischen Material realisiert und auf der Membran durch Thermoschweißung befestigt ist.

FIG.1a

FIG.1b

FIG.2a

FIG.2b

# FIG. 3

# FIG. 6

## FIG. 3a

## FIG. 3b

FIG. 4

## FIG. 5